# EUROPEAN PATENT APPLICATION

(11) **EP 2 579 192 A1**
(43) Date of publication of application: **10.04.2013**
(21) Application number: 11789499.8
(22) Date of filing: 22.02.2011
(51) Int. Cl.: G06Q 10/00, G06Q 40/00

(54) **ECONOMIC ACTIVITY INDEX PRESENTING SYSTEM**

(30) Priority: 04.02.2011 JP 2011022683; 31.05.2010 JP 2010124084
(71) Applicant: Data Forevision, Ltd, Tokyo 104-0045 (JP)
(72) Inventor: OHKUBO, Yutaka, Tokyo 104-0045 (JP); NISHIMURA, Takuya, Tokyo 104-0045 (JP); TANAKA, Noboru, Tokyo 104-0045 (JP)
(74) Representative: Emerson, Peter James
(86) International application number: PCT/JP2011/053786
(87) International publication number: WO 2011/152087

(57) **Abstract**

The Account Transaction Record Information of a financial institution and Supplementary Information are imported, and the Account Transaction Record Information and the Supplementary Information are linked. Subsequently, Deposit Source/Withdrawal Destination Linking Information in which the name and category of the deposits/withdrawals are defined is generated, and balance information for each account and deposits/withdrawals information, which is journalized for each item defining the usage of the funds, the source of the funds, and the continuity and non-continuity thereof, are generated. Then the information items indicating the trend of the financing and business performance of companies or the trend of the financing and household budgeting of individuals are extracted and are converted into variables and index numbers by combining the balance information for each account and the deposits/withdrawals information, and economic activity indices such as financing trend indices, business performance trend indices, and household budgeting trend indices are generated.

## Description

### TECHNICAL FIELD

The present invention relates to an economic activity index presenting system which presents indices respecting economic activities by means of Account Transaction Record Information of a financial institution (mainly a bank).

### BACKGROUND ART

Conventionally, as disclosed in Patent documents 1 to 4, Account Transaction Record Information has been used mainly to analyze transaction information and detect abnormal transactions, so as to prevent a transaction accident from occurring. However, economic statistics, which allows one to monitor changes and needs in the social economic environment accurately, are an important source of information. Also, the economic statistics are important basic data for companies and individuals to make a decision rationally or to secure rational and objective decision-making on politics. The present social economy is in a time of drastic change with its upgrading information-processing capability and its diversifying needs, leading society to face various problems. It is because conventional economic statistics are not suitable for figuring out the actual status of economic activity on a timely basis, that the importance of economic activity indices are increasing.

Most conventional public statistics rely on interviews with randomly selected people by means of survey sheets or the like. Accordingly, it is difficult to secure the accuracy of data due to the small number of samples, biased samplings, and influences of subject views or mental states of the respondents. Further, restrictions on data collection are being tightened along with the growing sense of information management and personal information protection within companies. Moreover, with the conventional way, it requires substantial manpower to conduct a survey and to compile the results, leading to the expenditure of a great amount of time and costs. Therefore, conducting an efficient and accurately secured investigation or a time lag between the investigation proceeding and the announcement is inevitable. Accordingly, it can hardly be said that it is feasible to ensure a timely and up-to-the-minute announcement.

In addition, it has been difficult to conduct a detailed investigation while concurrently maintaining consistency in the multidimensional analysis wherein the items are journalized on attribute basis, for example by company, by individual, by transaction, by region, by company size, by category of business, by age, and the like. It also has been difficult to meet the growing needs from researchers who intend to research and analyze data from their own viewpoints by means of different types of information which cannot be obtained by the conventional way of compiling data, due to the lack of means for structural analyzing wherein the data are compiled by both journalized subcategories and consolidated categories.

Furthermore, official statistics which are released by the decentralized statistical organization for the use in ministries and agencies involve problems. That is, it is difficult to maintain consistency between statistics so that it cannot fully adapt to all changes in social structures. Or the use of record information, which is obtained by means other than interviews, such as by registrations, notifications and declarations, is not fully utilized. In addition, it is considered to be a problem that client management in financial institutions rely mainly on past financial information and transaction records, which means that the present account transaction records are not fully utilized.

### PRIOR ART PATENT DOCUMENTS

Patent Document 1:
   Japanese Patent Application Laid-Open No. 2009-140273
Patent Document 2:
   Japanese Patent Application Laid-Open No. 2008-203969
Patent Document 3:
   Japanese Patent Application Laid-Open No. 2006-251957
Patent Document 4:
   Japanese Patent Application Laid-Open No. 2003-208514

### SUMMARY OF THE INVENTION

### TECHNICAL PROBLEMS

To solve the problems described above, the present invention's goal is to present valuable economic activity indices. The process of the present invention requires no manpower to investigate and compile the data which makes it more efficient. The indices are more direct, more objective and non-biased because they allow one to exhaustively recognize the changes in social structures, the ebbs and tides of economic activities carefully in detail, and to analyze in a multidimensional and structural way on a timely basis.

### SOLUTION TO PROBLEM

In order to solve the problems shown above, claim 1 of the present invention contains a primary feature of a system in a way which presents indices by which the economic activity for each account holder can be analyzed. Said feature is achieved by importing Account Transaction Record Information and Supplementary Information from a core banking system of a financial institution, concurrently comprising some means described as follows: a means for linking by which the Account Transaction Record Information and the Supplementary Information are linked in order to generate Deposit Source/Withdrawal Destination Linking Information; a means for extraction by which the balance information for each account and the deposits/withdrawals information are extracted from the Deposit Source/Withdrawal Destination Linking Information; a means for journalization by which the extracted deposits/withdrawals information are journalized for each of the prescribed items; a means for compilation by which the journalized deposits/withdrawals information are compiled for each of the prescribed items; and a means for index calculation by which the compiled deposits/withdrawals information and the balance information for each account are combined in order to calculate the indices.

The means for journalization functions by determining the source of the deposits or the destination of the withdrawals by using the included items within the Account Transaction Record Information such as transaction type, notes and the like. For example, when the transaction type is a "transfer deposit" with a note of "finance loan" or the like, it is considered to be a borrowing. When the transaction type is "transfer deposit" with a note of "term deposit", "investment fund" or the like, it is considered to be a cancellation or a sellout of a financial product. Here, Supplementary Information of the source-of-funds account or the destination-of-funds account is not necessary to be linked with the target account. Accordingly, claim 2 of the present invention contains a primary feature of a system in a way which presents indices by which the economic activity for each account holder can be analyzed. Said feature is achieved by importing Account Transaction Record Information from a core banking system of a financial institution, concurrently comprising some means described as follows: a means for extraction by which the balance information for each account and the deposits/withdrawals information are extracted from the Account Transaction Record Information; a means for journalization by which the extracted deposits/withdrawals information are journalized for each of the prescribed items; a means for compilation by which the journalized deposits/withdrawals information are compiled for each of the prescribed items; and a means for index calculation by which the compiled deposits/withdrawals information and the balance information for each account are combined in order to calculate the indices.

### ADVANTAGEOUS EFFECTS OF INVENTION

An aggregation of the Account Transaction Record Information is a miniaturized version of the current condition of the economic activity which is identified comprehensively and directly, since clients of financial institutions are wide-ranging and every current corporate/individual economic activity (fund transfer/settlement) is conducted through the financial institutions.

The present invention implements the ability to calculate a variety of economic activity indices by first exporting the Account Transaction Record Information and the Supplementary Information from the core banking system of the financial institution to a data processor, subsequently linking deposit/withdrawal destinations to each transaction record information, and generating the balance information for each account and deposits/withdrawals information, which are journalized for each prescribed item defining the usage of the funds within each deposit/withdrawal transactions, the source of the funds, and the continuity and non-continuity thereof. Therefore, the present invention is capable of presenting valuable economic activity indices which are important basic data for companies and individuals for monitoring changes and needs in the social economic environment, for making rational decisions, or for making rational and objective decisions concerning politics. In the system process, no manpower is required to investigate and compile the data. The calculated indices are objective and non-biased. Also, the changes in social structures and the ebbs and flows of the economic activities are comprehensively and carefully identified, in a multidimensional and structural way wherein the data are compiled by both journalized subcategories and consolidated categories on a timely basis. Moreover, in terms of transaction management of the financial institutions, the calculated indices can be utilized for not only credit examinations but also product sales strategies and monitoring management, wherein the connections with external factors such as categories of business of the clients and sale destinations are reflected.

### BRIEF DESCRIPTION OF THE DRAWINGS

[Figure 1] Figure 1 is a configuration diagram of the economic activity index presenting system when carried out the present invention.
[Figure 2] Figure 2 is a data-flow chart of deposit journal entries for companies and business owners.
[Figure 3] Figure 3 is a data-flow chart of withdrawal journal entries for companies and business owners.
[Figure 4] Figure 4 is a data-flow chart of deposit journal entries for individuals.
[Figure 5] Figure 5 is a data-flow chart of withdrawal journal entries for individuals.
[Figure 6] Figure 6 is a flow chart of the processing for calculating respective indices for companies and business owners.
[Figure 7] Figure 7 is an illustration diagram of the business performance prediction.
[Figure 8] Figure 8 is a flow chart of the processing for calculating respective indices for individuals.
[Figure 9] Figure 9 is an illustration diagram of the household budgeting prediction.
[Figure 10] Figure 10 is a flow chart of the processing for generating funds circulation information.
[Figure 11] Figure 11 is an illustration diagram of the cross-tab of the funds circulation information.

### DETAILED DESCRIPTION OF THE INVENTION

Hereinafter, embodiments of this invention will be explained in detail.

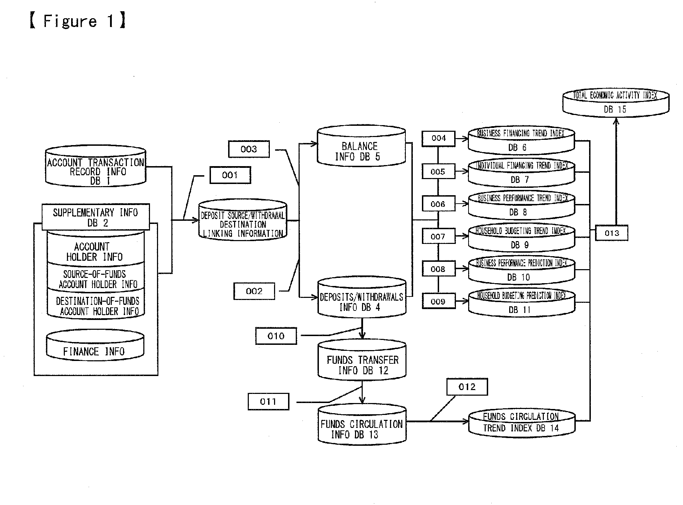

Figure 1 shows a configuration diagram of the economic activity index presenting system when carried out according to the present invention.
First, Account Transaction Record Information Database 1 and Supplementary Information Database 2 are imported from a core banking system to a data processor so that Deposit Source/Withdrawal Destination Linking Information are generated and exported to Deposit Source/Withdrawal Destination Linking Information Database 3 (001). The Account Transaction Record Information may include a transaction type, date, subject, amount, transaction frequency, and notes. Further, the Account Transaction Record Information may also include an account holder's name, branch, account number, and transaction currency. The Account Transaction Information characterizes not only the transaction but also the account holder such as the account holder's name. Besides, in terms of deposits, the Account Transaction Record Information includes some information which classifies (journalizes) the transactions into the following categories based on the source of the funds: sales, borrowing, or financial transaction in respect of companies and salary/bonus, pension, cash deposit, financial transaction, or borrowing in respect of individuals. In terms of withdrawals, the Account Transaction Record Information includes some information which classifies the transactions into the following categories based on the usage of the funds: cost, repayment of debt, or financial transaction in respect of companies and social insurance premium/tax, repayment of debt, or paying in respect of individuals. The Account Transaction Record Information also includes some information which estimates the continuity and non-continuity of the deposits/withdrawals. Moreover, the account attribution information within the Supplementary Information includes account holder (principal) information, source-of-funds account holder information, and destination-of-funds account holder information. In addition, said account attribution information within the Supplementary Information also includes company size, region, category of business, rating, and length of time of operation with respect to companies and age, sex, occupation, residence form, and household composition with respect to individuals.

Next, Deposit Source/Withdrawal Destination linking information Database 3 is accessed so that deposits/withdrawals information which have been journalized for each item by the use of the funds, the source of the funds, and the continuity and non-continuity thereof is generated and output to Deposits/Withdrawals Information Database 4 (002). Herein, the characterization of the deposits/withdrawals information contains not only the above described Account Transaction Record Information but also the characterization of the Supplementary Information linked to the Account Transaction Record Information. However, there is no deposits/withdrawals information which contains only the Supplementary Information since the Supplementary Information itself is not the target for journalizing. Additionally, said Deposits/Withdrawals Information Database 4 stores the respective transaction information (deposits/withdrawals information) which are linked to the account characterization information and journalized for each item. Deposit Source/Withdrawal Destination Linking Information Database 3 stores the respective deposits/withdrawals information in any format as long as the deposits/withdrawals information is linked to the item and the source-of-funds/destination-of-funds account holder information.

Subsequently, Deposit Source/Withdrawal Destination Linking Information Database 3 is accessed so that balance information for each account which has been journalized for each item characterizing the use of the funds, the source of the funds, and the continuity and non-continuity thereof is generated and output to Balance Information for each account Database 5 (003).

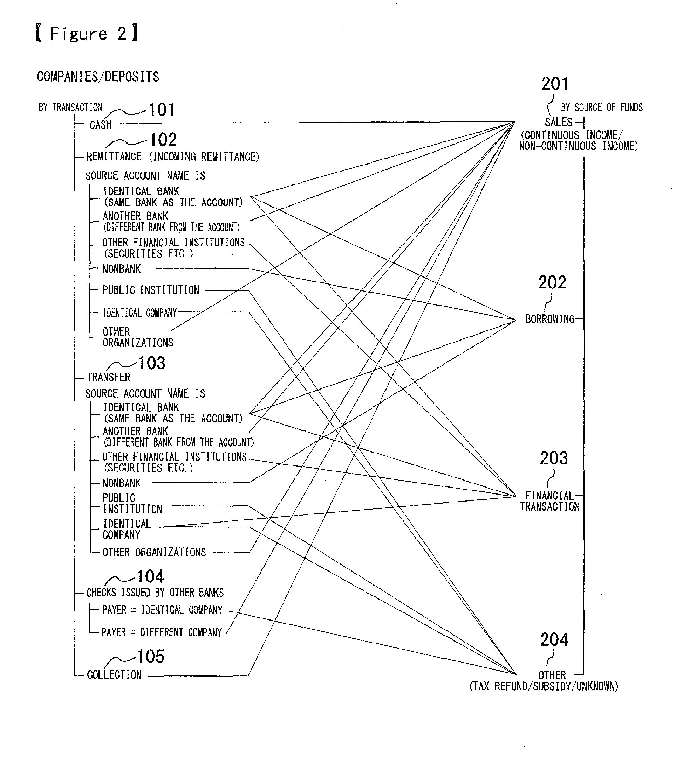

Below, deposit journal entries for companies and business owners which identify the source of the funds, and the continuity and the non-continuity are described in detail. As shown in Figure 2, the journal entries are booked by transaction type, into Cash 101, Remittance (incoming remittance) 102, Transfer 103, Checks issued by other banks 104, or Collection 105, leading to be posted to Sales per source of the funds 201 (continuous income/non-continuous income), Borrowing 202, Financial Transaction 203, or Other 204(tax refund, subsidy etc./unknown cause).

Cash 101 is all to be journalized as Sales 201 (continuous income).

In terms of Remittance (incoming remittance) 102, if the source-of-funds account name is the identical bank (the same bank as at which the account exists), it is journalized as Sales 201 (continuous income), Borrowing 202, or Financial Transaction 203, judging by its note. If the source-of-funds account name is another bank (a different bank from at which the account exists), it is journalized as Sales 201 (continuous income if the same source-of-funds account name appears over a period of months, non-continuous income as for the other cases). If the source-of-funds account name is other financial institutions (securities etc.), it is journalized as Financial Transaction 203. If the source-of-funds account name is a nonbank institution, it is journalized as Borrowing 202. If the source-of-funds account name is a public institution, it is journalized as Other 204 (tax refund, subsidy etc.). If the source-of-funds account name is the identical company, it is journalized as Other 204 (unknown cause). If the source-of-funds account name is an organization other than those above, it is journalized as Sales 201 (continuous income if the same source-of-funds account name appears over a period of months, non-continuous income for the rest).

In terms of Transfer 103, if the source-of-funds account name is the identical bank (the same bank as at which the account exists), it is journalized as Borrowing 202 or Financial Transaction 203, judging by its note. If the source-of-funds account name is another bank (a different bank from at which the account exists), it is journalized as Sales 201 (continuous income if the same source-of-funds account name appears over a period of months, non-continuous income as for the other cases). If the source-of-funds account name is other financial institutions (securities etc.), it is journalized as Financial Transaction 203. If the source-of-funds account name is a nonbank institution, it is journalized as Borrowing 202. If the source-of-funds account name is a public institution, it is journalized as Other 204 (tax refund, subsidy etc.). If the source-of-funds account name is the identical company, it is journalized as Financial Transaction 203 or Other 204 (unknown cause). If the source-of-funds account name is an organization other than those above, it is journalized as Sales 201 (continuous income if the same source-of-funds account name appears over a period of months, non-continuous income as for the other cases).

In terms of Checks issued by other banks 104, if a payer is the identical company, it is journalized as Other 204 (unknown cause) . On the other hand, if the payer is not the identical company, it is all journalized as Sales 201 (continuous income).

Collection 105 is all to be journalized as Sales 201 (continuous income).

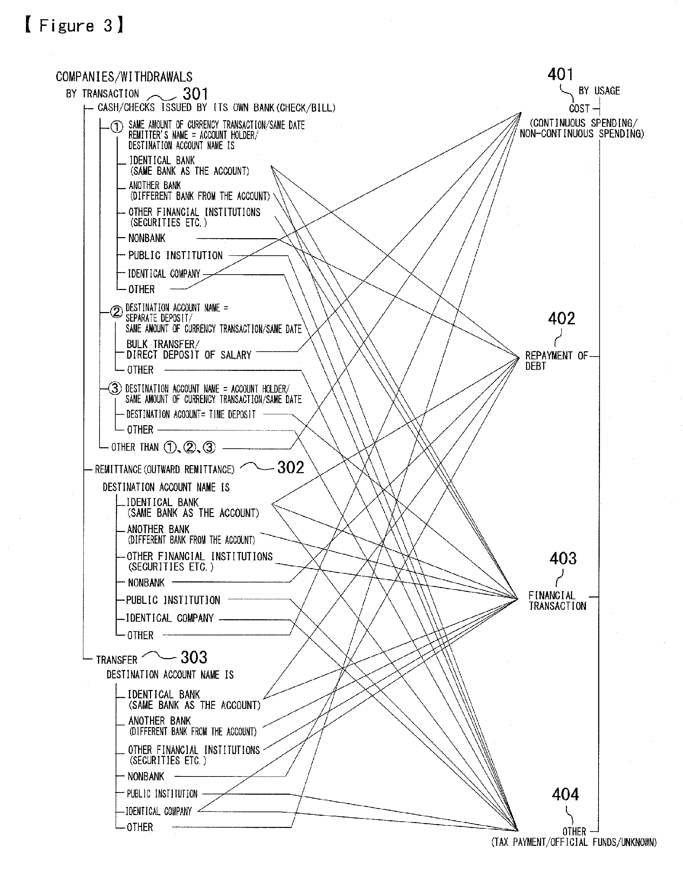

Next, withdrawal journal entries for companies and business owners wherein each item is defined by the usage of the funds and the continuity and non-continuity thereof will be explained below. As shown in Figure 3, the journal entries are booked by transaction type, into Cash/Checks issued by its own bank 301, Remittance (outward remittance) 302, or Transfer 303, leading to be posted by usage of the funds to Cost 401 (continuous spending/non-continuous spending), Repayment of debt 402 (continuous spending/non-continuous spending), Financial Transaction 403, or Other 404 (tax payment, official funds etc./unknown cause).

Cash/Checks issued by its own bank 301 is journalized respectively as follows: Scenario 1, in the case that the same amount of currency transaction whose remitter is same as the account holder is found on the same day, if the destination-of-funds account name is the identical bank (the same bank as at which the account exists), it is journalized as Repayment of Debt 402 (continuous spending if the same destination of the funds appears over a period of months, non-continuous spending as for the other cases) or Financial Transaction 403, judging by its note. If the destination-of-funds account name is another bank (a different bank from at which the account exists), it is journalized as Financial Transaction 403 or Other 404 (unknown causes). If the destination-of-funds account name is other financial institutions (securities etc.), it is journalized as Financial Transaction 403. If the destination-of-funds account name is a nonbank institution, it is journalized as Repayment of Debt 402 (continuous spending if the same destination of the funds appears over a period of months, non-continuous spending as for the other cases). If the destination-of-funds account name is a public institution, it is journalized as Other 404 (tax payment etc.). If the destination-of-funds account name is the identical company, it is journalized as Other 404 (unknown cause). If the destination-of-funds account name is an organization other than those above, it is all journalized as Cost 401 (continuous spending). Scenario 2, in the case that the destination-of-funds account name in which the same amount of currency transaction being found on the same day is a separate deposit, if the transaction is a bulk transfer or a direct deposit of salary, it is all journalized as Cost 401 (continuous spending). With the other cases, it is journalized as Other 404 (unknown cause). Scenario 3, in the case that the destination-of-funds account name in which the same amount of currency transaction being found on the same day is same as the account holder, if the destination account is a time deposit account, it is journalized as Financial Transaction 403. With the other cases, it is journalized as Other 404 (unknown cause). Other than Scenarios 1, 2, and 3, it is all journalized as Cost 401 (continuous spending).

In terms of Remittance (outward remittance) 302, if the destination-of-account name is the identical bank (the same bank as at which the account exists), it is journalized as Repayment of Debt 402 (continuous spending if the same destination of the funds appears over a period of months, non-continuous spending as for the other cases) or Financial Transaction 403, judging by its note. If the destination-of-funds account name is another bank (a different bank from at which the account exists), it is journalized as Financial Transaction 403 or Other 404 (unknown cause). If the destination-of-funds account name is other financial institutions (securities etc.), it is journalized as Financial Transaction 403. If the destination-of-funds account name is a nonbank institution, it is journalized as Repayment of Debt 402 (continuous spending if the same destination of the funds appears over a period of months, non-continuous spending as for the other cases). If the destination-of-funds account name is a public institution, it is journalized as Other 404 (tax payment etc.). If the destination-of-funds account name is the identical company, it is journalized as Other 404 (unknown cause). If the destination-of-funds account name is an organization other than those above, it is journalized as Cost 401 (continuous spending if the same destination of the funds appears over a period of months, non-continuous spending as for the other cases).

In terms of Transfer 303, if the destination-of-funds account name is the identical bank (the same bank as at which the account exists), it is journalized as Repayment of Debt 402 (continuous spending if the same destination of the funds appears over a period of months, non-continuous spending as for the other cases), Financial Transaction 403, or Other 404 (unknown cause), judging by its note. If the destination-of-funds account name is another bank (a different bank from at which the account exists), it is journalized as Financial Transaction 403. If the destination-of-funds account name is other financial institutions (securities etc.), it is journalized as Financial Transaction 403. If the destination-of-funds account name is a nonbank institution, it is journalized as Repayment of Debt 402 (continuous spending if the same destination of the funds appears over a period of months, non-continuous spending as for the other cases). If the destination-of-funds account name is a public institution, it is journalized as Other 404 (tax payment etc.). If the destination-of-funds account name is the identical company, it is journalized as Financial Transaction 403 or Other 404 (unknown cause), judging by its note. If the destination-of-funds account name is organizations other than those above, it is journalized as Cost 401 (continuous spending if the same destination of the funds appears over a period of months, non-continuous spending as for the other cases).

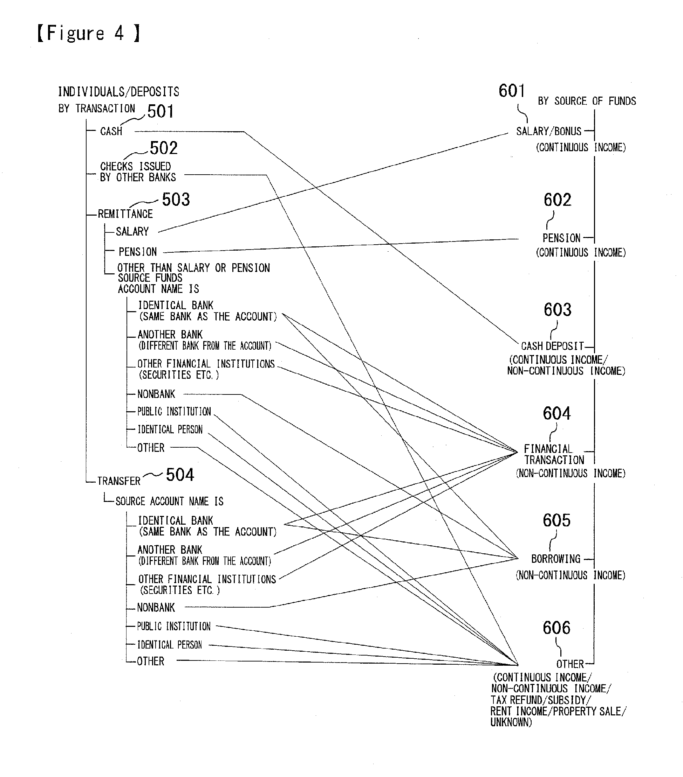

Next, deposit journal entries for individuals wherein each item is characterized by the source of the funds and the continuity and non-continuity thereof will be explained below. As shown in Figure 4, the journal entries are booked by transaction type, into Cash 501, Checks issued by other banks 502, Remittance 503, or Transfer 504, leading to be posted to Salary/Bonus 601, Pension 602, Cash Deposit 603 (continuous income/non-continuous income), Financial Transaction 604 (non-continuous income), Borrowing 605 (non-continuous income), or Other 606 (continuous income/non-continuous income, tax refund, subsidy etc./rent income etc./property sale etc./unknown cause).

Cash 501 is journalized as Cash Deposit 603. Herein, it is defined as a continuous income of whichever is the smaller amount of the monthly total of deposits or the average amount of deposits during a certain period of time. Accordingly, when the monthly total amount of deposits is larger than the average amount of deposits during a certain period of time, the difference between the two values is defined as a non-continuous income.

Checks issued by other banks 502 is journalized as Other 606. Herein, it is defined as a continuous income of whichever is the smaller amount of a monthly total of the deposits or the average amount of deposit during a certain period of time. Accordingly, it is defined as a non-continuous income comprised of the difference between the monthly total amount of the deposit and the aforementioned figure.

In terms of Remittance 503, if the deposit is a direct deposit of salary, it is journalized as Salary/Bonus 601. If the deposit is a pension, it is journalized as Pension 602 (continuous income). If the deposit is other than a direct deposit of salary or a pension and the source-of-funds account name is the identical bank (the same bank as at which the account exists), it is journalized as Financial Transaction 604 (non-continuous income), Borrowing 605 (non-continuous income), or Other 606 (non-continuous income/unknown cause), judging by its note. If the source-of-funds account name is another bank (a different bank from at which the account exists), it is journalized as Financial Transaction 604 (non-continuous income). If the source-of-funds account name is other financial institutions (securities etc.), it is journalized as Financial Transaction 604 (non-continuous income). If the source-of-funds account name is a nonbank institution, it is journalized as Borrowing 605 (non-continuous income). If the source-of-funds account name is a public institution, it is journalized as Other 606 (tax refund, subsidy etc.). If the source-of-funds account name is the identical person, it is journalized as Other 606 (non-continuous income/unknown cause). If the source-of-funds account name is organizations other than those above, it is journalized as Other 606 (continuous income/rent income etc. if the same source-of-funds account name appears over a period of months, non-continuous income/property sale etc. as for the other cases).

In terms of Transfer 504, if the source-of-funds account name is the identical bank (the same bank as at which the account exists), it is journalized as Financial Transaction 604 (non-continuous income), Borrowing 605 (non-continuous income), or Other 606 (non-continuous income/unknown cause), judging by its note. If the source-of-funds account name is another bank (a different bank from at which the account exists), it is journalized as Financial Transaction 604 (non-continuous income). If the source-of-funds account name is other financial institutions (securities etc.), it is journalized as Financial Transaction 604 (non-continuous income). If the source-of-funds account name is a nonbank institution, it is journalized as Borrowing 605 (non-continuous income). If the source-of-funds account name is a public institution, it is journalized as Other 606 (tax refund, subsidy etc.). If the source-of-funds account name is the identical person, it is journalized as Financial Transaction 604 (non-continuous income) or Other 606 (non-continuous income/unknown cause), judging by its note. If the source-of-funds account name is an organization other than those above, it is journalized as Other 606 (continuous income/rent income etc. if the same source-of-funds account name appears over a period of months, non-continuous income/property income etc. as for the other cases).

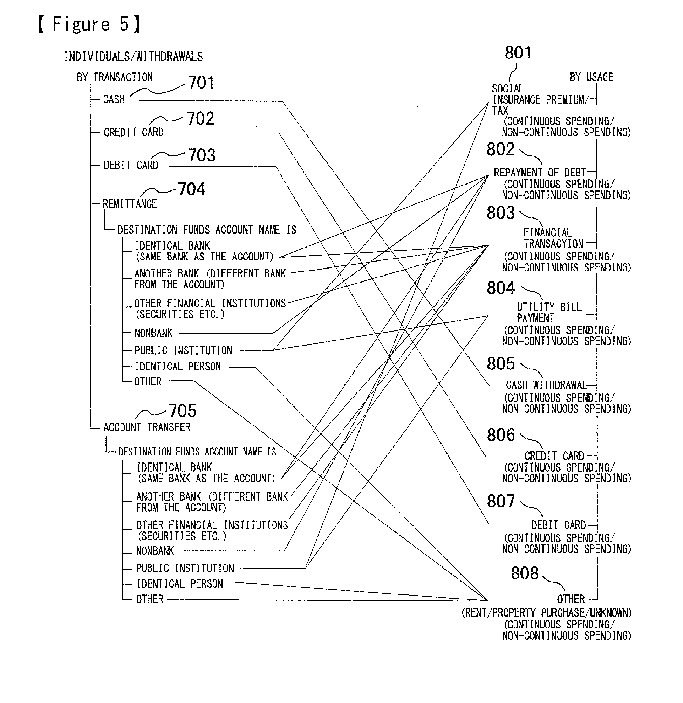

Next, withdrawal journal entries for individuals wherein each item is characterized by usage of the funds and the continuity and non-continuity thereof will be explained below. As shown in Figure 5, the journal entries are booked by transaction type, into Cash 701, Credit Card 702, Debit Card 703, Remittance 704, or Account Transfer 705, leading them to be posted by usage of the funds to Social Insurance Premium/Tax Payment 801 (continuous spending/non-continuous spending), Repayment of Debt 802 (continuous spending/non-continuous spending), Financial Transaction 803 (continuous spending/non-continuous spending), Utility Bill Payment 804 (continuous spending/non-continuous spending), Cash Withdrawal 805 (continuous spending/non-continuous spending), Credit Card 806 (continuous spending/non-continuous spending), Debit Card 807 (continuous spending/non-continuous spending), or Other 808 (continuous spending/rent payment etc., non-continuous spending/property sale etc., non-continuous spending/unknown cause).

Cash 701 is journalized as Cash Withdrawal 805. Herein, it is defined as a continuous spending of whichever is the smaller amount of the monthly total of withdrawals or the average amount of withdrawals during a certain period of time. Accordingly, when the monthly total amount of withdrawals is larger than the average amount of withdrawals during a certain period of time, the difference between the two values is defined as a non-continuous spending.

Credit Card 702 is journalized as Credit Card 806. Herein, it is defined as a continuous spending of whichever is the smaller amount of a monthly total of the withdrawals or the average amount of the withdrawal during a certain period of time. Accordingly, it is defined as a non-continuous spending that the difference between the monthly total amount of the withdrawals and the aforementioned figure. Debit Card 807 is journalized as Debit Card 807. Herein, it is defined as a continuous spending and whichever is the smaller amount of a monthly total of the withdrawals or the average amount of the withdrawal during a certain period of time. Accordingly, it is defined as a non-continuous spending that the difference between the monthly total amount of the withdrawals and the aforementioned figure.

In terms of Remittance 704, if the destination-of-funds account name is the identical bank (the same bank as at which the account exists), it is journalized as Financial Transaction 803 (non-continuous spending), Repayment of Debt 802 (non-continuous spending), or Other 803 (non-continuous spending/unknown cause), judging by its note. If the destination-of-funds account name is another bank (a different bank from at which the account exists), it is journalized as Financial Transaction 803 (non-continuous spending). If the destination-of-funds account name is other financial institutions (securities etc.), it is journalized as Financial Transaction 803 (non-continuous spending). If the destination-of-funds account name is a nonbank institution, it is journalized as Repayment of Debt 802 (non-continuous spending) . If the destination-of-funds account name is a public institution, it is journalized as Social Insurance Premium/Tax Payment 801 (non-continuous spending) or Utility Bill Payment 804 (non-continuous spending), judging by its name of the destination account. If the destination-of-funds account name is the identical person, it is journalized as Other 808 (unknown cause). If the destination-of-funds account name is organizations other than those above, it is journalized as Other 808 (rent payment etc. if the same destination of the funds appears over a period of months, property purchase etc. as for the other cases).

In terms of Account Transfer 705, if the destination-of-funds account name is the identical bank (the same bank as at which the account exists), it is journalized as Financial Transaction 803 (continuous spending), Repayment of Debt 802 (continuous spending), or Other 808 (continuous spending/unknown cause), judging by its note. If the destination-of-funds account name is another bank (a different bank from at which the account exists), it is journalized as Financial Transaction 803 (continuous spending). If the destination-of-funds account name is other financial institutions (securities etc.), it is journalized as Financial Transaction 803 (continuous spending). If the destination-of-funds account name is a nonbank institution, it is journalized as Repayment of Debt 802 (continuous spending). If the destination-of-funds account name is a public institution, it is journalized as Social Insurance Premium/Tax Payment 801 (continuous spending) or Utility Bill Payment 804 (continuous spending), judging by its note. If the destination-of-funds account name is the identical person, it is journalized as Other 808 (unknown cause). If the destination-of-funds account name is organizations other than those above, it is journalized as Other 808 (continuous spending/rent payment etc. if the same destination of the funds appears over a period of months, non-continuous spending/property sale etc. as for the other cases).

Referring again to Figure 1, Deposits/Withdrawals Information Database 4 and Balance Information for each account base 5 are accessed so that information elements which explain the tightness level of financing of companies and business owners are extracted and are converted into variables and index numbers, resulting in the generation of a Business Financing Trend Index which indicates the tightness level of financing, which are eventually output to Business Financing Trend Index Database 6 (004).

Then, Deposits/Withdrawals Information Database 4 and Balance Information for each account Database 5 are accessed so that information elements which explain the tightness level of the financing of individual earnings and consumptions are extracted and are converted into variables and index numbers, resulting in the generation of an Individual Financing Trend Index which indicates the tightness level of financing, which are eventually output to Individual Financing Trend Index Database 7 (005).

Then, Deposits/Withdrawals Information Database 4 and Balance Information for each account Database 5 are accessed so that information elements which explain the activity level of economic activities of companies and business owners are extracted and are converted into variables and index numbers, resulting in the generation of a Business Performance Trend Index which indicates the activity level of business activities, which are eventually output to Business Performance Trend Index Database 8 (006).

Then, Deposits/Withdrawals Information Database 4 and Balance Information for each account Database 5 are accessed so that information elements which explain the activity level of individual earnings, consumptions, and the like are extracted and are converted into variables and index numbers, resulting in the generation of a Household Budgeting Trend Index which indicates the activity level of individual earnings, consumptions, and the like, which are eventually output to Household Budgeting Trend Index Database 9 (007).

Then, finance information within the Supplementary Information Database 2, Deposits/Withdrawals Information Database 4 and Balance Information for each account Database 5 are accessed so that information elements which explain the association between the account activity records and the finance information and also predict a future performance of activities of companies and business owners are extracted and are converted into variables and index numbers, resulting in the generation of a Business Performance Prediction Index which predicts the future performance, which are eventually output to Business Performance Prediction Index Database 10 (008).

Then, Deposits/Withdrawals Information Database 4 and Balance Information for each account Database 5 are accessed so that information elements which predict the future individual budgeting trend by explaining the association between the account activity records and the household earning and income/spending records are extracted and are converted into variables and index numbers, resulting in the generation of a Household Budgeting Prediction Index which predicts the future household budgeting trend, and is eventually output to Household Budgeting Prediction Index Database 11 (009).

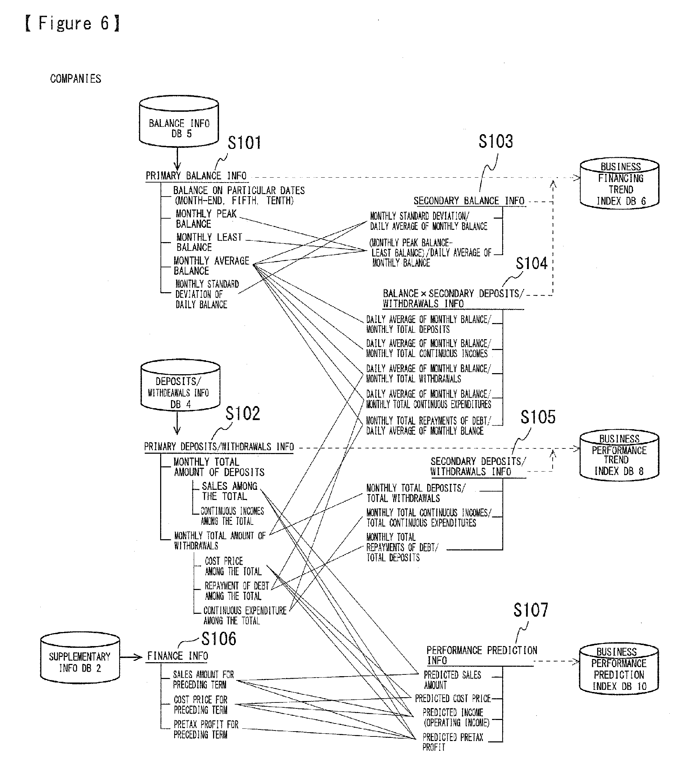

As shown in Figure 6, each of the indices of the companies and business owners are generated as follows: First, Balance Information for each account Database 5 is accessed so that a Primary Balance Information S101 is generated. Also, a Primary Deposits/Withdrawals Information S102 is generated from the Deposits/Withdrawals Information Database 4.
Herein, the Primary Balance Information S101 is composed of "balance on particular dates (month-end, the fifth, and the tenth)", "monthly peak balance", "monthly least balance", "daily average of the monthly balance", and "monthly standard deviation of daily balance". The Primary Deposits/Withdrawals Information S102 is composed of "monthly total amount of deposits", "sales among the monthly total deposits", "continuous incomes among the monthly total deposit", "monthly total amount of withdrawals", "cost price among the monthly total withdrawals", "repayment amount of debt among the monthly total withdrawals.", and "continuous expenditure among the total monthly withdrawals".

Subsequently, a plurality of the Primary Balance Information S101 is associated with each other so that a Secondary Balance Information S103 is generated. The Primary Balance Information S101 and the Primary Deposits/Withdrawals Information S102 are associated with each other so that a Balance × Secondary Deposits/Withdrawals Information S104 is generated. A plurality of the Primary Deposits/Withdrawals Information S102 is associated with each other so that a Secondary Deposits/Withdrawals Information S105 is generated.
Herein, the Secondary Balance Information S103 is composed of "monthly standard deviation/daily average of the monthly balance" and "(monthly peak balance - monthly least balance)/ daily average of the monthly balance". The Balance × Secondary Deposits/Withdrawals Information S104 is composed of "daily average of the monthly balance/monthly total amount of deposits", "daily average of the monthly balance/monthly total amount of continuous incomes", "daily average of the monthly balance/monthly total amount of withdrawals", "daily average of the monthly balance/monthly total amount of continuous expenditures", and "monthly total amount of repayments of debt/daily average of the monthly balance". The Secondary Deposits/Withdrawals Information S105 is composed of "monthly total amount of deposits/monthly total amount of withdrawals", "monthly total amount of continuous incomes/monthly total amount of continuous expenditures", and "monthly total amount of repayments of debt/monthly total amount of deposits".

Next, the Primary Balance Information S101, the Secondary Balance Information S103, and the Balance × Secondary Deposits/Withdrawals Information S104 are associated with each other and are converted into variables and index numbers, resulting in the generation of a Business Financing Trend Index which is eventually output to a Business Financing Trend Index Database 6. Also, the Primary Deposits/Withdrawals Information S102 and the Secondary Deposits/Withdrawals Information S105 are associated with each other and are converted into variables and index numbers, resulting in the generation of a Business Performance Trend Index which is eventually output to Business Performance Trend Index Database 8.

Thereafter, past Finance Information S106 and the Primary Deposits/Withdrawals Information S102 are associated with each other so that Performance Prediction Information S107 is generated and is converted into variables and index numbers, resulting in the generation of a Business Performance Prediction Index which is eventually output to Business Performance Prediction Index Database 10.

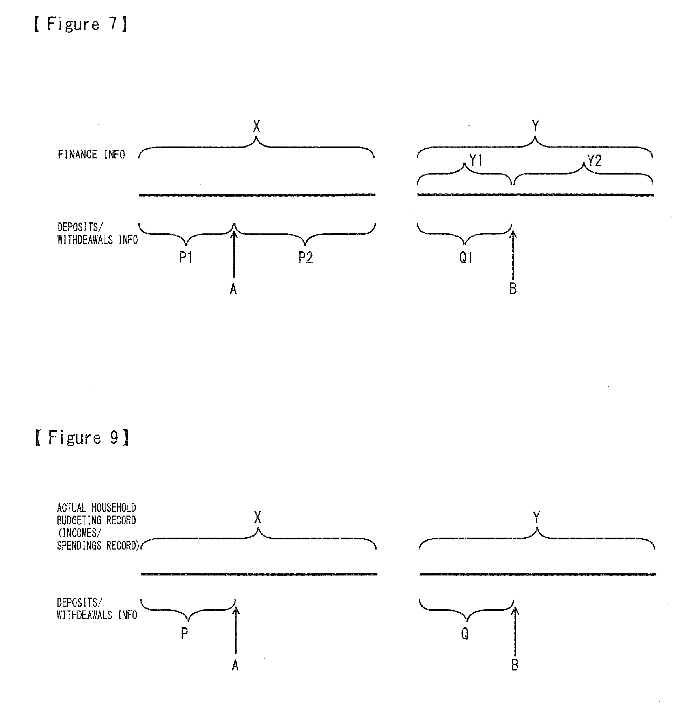

As shown in Figure 7, the performance prediction is made by generating a future performance prediction Y (a value corresponding to the actual performance record X) by means of a past actual performance record (finance information) X, an actual deposits/withdrawals performance of the current fiscal term Q1 which is generated by deposits/withdrawals information within the period of up to the present time B, a past actual deposits/withdrawals performance P1 within the period of up to the same point in time A, and a past actual deposits/withdrawals performance P2 within the period from the point in time A.
The generating process is as follows: First, an adjusting variable s (s = X/ (P1 + P2)) which defines the association between the sum of actual deposits/withdrawals performance P1 and P2 which are generated by deposits/withdrawals information and the actual performance record X is calculated. Also, a variation variable k (k = Q1/P1) which defines the association between the business activity performance at present time B and the business activity variation in the future is calculated.

Then, the future performance prediction is divided into Y1 which is a current already-passed period performance prediction at the present time B and Y2 which is a current unexpired period performance prediction, which is defined that the future (end of the current fiscal term) performance prediction Y = Y1 + Y2. By means of the aforementioned adjusting variables and the variation variable k, it is calculated that Y1 = Q1 × s, Y2 = P2 × k × s, and the future performance prediction Y = (Q1 + P2 × k) × s.

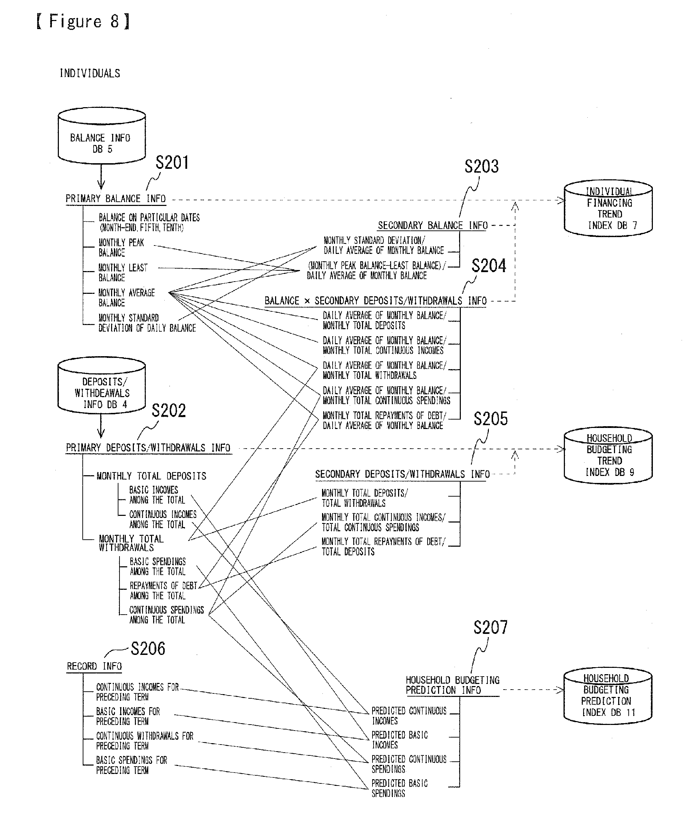

As shown in Figure 8, each of the indices of individuals is generated as follows: First, Balance Information for each account Database 5 is accessed so that a Primary Balance Information S201 is generated. Also, a Primary Deposits/Withdrawals Information S202 is generated by using Deposits/Withdrawals Information Database 4.
The Primary Balance Information S201 is composed of "balance on particular dates (month-end, the fifth, and the tenth)", "monthly peak balance", "monthly least balance", "daily average of the monthly balance", and "monthly standard deviation of daily balance". The Primary Deposits/Withdrawals Information S202 is composed of "monthly total amount of deposits", "basic incomes among the monthly total deposits", "continuous incomes among the monthly total deposit", "monthly total amount of withdrawals", "basic spending among the monthly total withdrawals", "repayment amount of debt among the monthly total withdrawals", and "continuous spending among the monthly total withdrawals".
Herein, "basic incomes" is the total amount of Salary/Bonus 601, Pension 602, and Other 606 (rent income etc.) by the source of the funds. And "basic spending" is the total amount of Social Insurance Premium/Tax Payment 801, Utility Bill Payment 804, and Other 808 (rent payment etc.) by the usage of the funds.

Subsequently, a plurality of the Primary Balance Information S201 is associated with each other so that Secondary Balance Information S203 is generated. The Primary Balance Information S201 and the Primary Deposits/Withdrawals Information S202 are associated with each other so that a Balance × Secondary Deposits/Withdrawals Information S204 is generated. A plurality of the Primary Deposits/Withdrawals Information S202 is associated with each other so that a Secondary Deposits/Withdrawals Information S205 is generated.
Herein, the Secondary Balance Information S203 is composed of "monthly standard deviation/daily average of the monthly balance" and "(monthly peak balance - monthly least balance)/ daily average of the monthly balance". The Balance × Secondary Deposits/Withdrawals Information S204 is composed of "daily average of the monthly balance/monthly total amount of deposits", "daily average of the monthly balance/monthly total amount of the continuous incomes", "daily average of the monthly balance/monthly total amount of withdrawals", "daily average of the monthly balance/monthly total amount of the continuous spending", and "monthly total amount of repayments of debt/daily average of the monthly balance". The Secondary Deposits/Withdrawals Information S205 is composed of "monthly total amount of deposits/monthly total amount of withdrawals", "monthly total amount of the continuous incomes/monthly total amount of the continuous spending", and "monthly total amount of repayments of debt/monthly total amount of deposits".

Next, the Primary Balance Information S201, the Secondary Balance Information S203, and the Balance × Secondary Deposits/Withdrawals Information S204 are associated with each other and are converted into variables and index numbers, resulting in the generation of an Individual Financing Trend Index which is eventually output to Individual Financing Trend Index Database 7. Also, the Primary Deposits/Withdrawals Information S202 and the Secondary Deposits/Withdrawals Information S205 are associated with each other and are converted into variables and index numbers, resulting in the generation of a Household Budgeting Trend Index which is eventually output to Household Budgeting Trend Index Database 9.

Thereafter, a past Record Information S206 and the Primary Deposits/Withdrawals Information S202 are associated with each other so that a Household Budgeting Prediction Information S207 is generated and is converted into variables and index numbers, resulting in the generation of a Household Budgeting Prediction Index which is eventually output to Household Budgeting Prediction Index Database 11.

As shown in Figure 9, the Household Budgeting Prediction is made by generating a Future Household Budgeting Prediction Y (a value corresponding to the Actual Household Budgeting Record X) by means of a past Actual Household Budgeting Record (incomes/spendings record) X, an actual deposits/withdrawals record of the current period Q which is generated by deposits/withdrawals information within the period of up to the present time B, and a past Actual Deposits/Withdrawals Record P within the period of up to the same point in time A.
The generating process is as follows: First, a variation variable k (k = Q/P) which defines the association between the income/spending activity at present time B and the income/spending activity variation in the future is calculated.

Then, if the already-passed period of months ≧ 1, it is calculated that the future household budgeting prediction Y = X × k, by means of the aforementioned variation variable k. If the already-passed period of months < 1, it is calculated that the future household budgeting prediction Y = X.

Referring again to Figure 1, Deposits/Withdrawals Information Database 4 is accessed so that the same transactions are determined by date, amount, and beneficiary/remitter name, resulting in the generation of a Fund Transfer Information Database 4 wherein either of the identical deposits/withdrawals information is deleted, which is eventually output to Funds Transfer Information Database 12 (010).

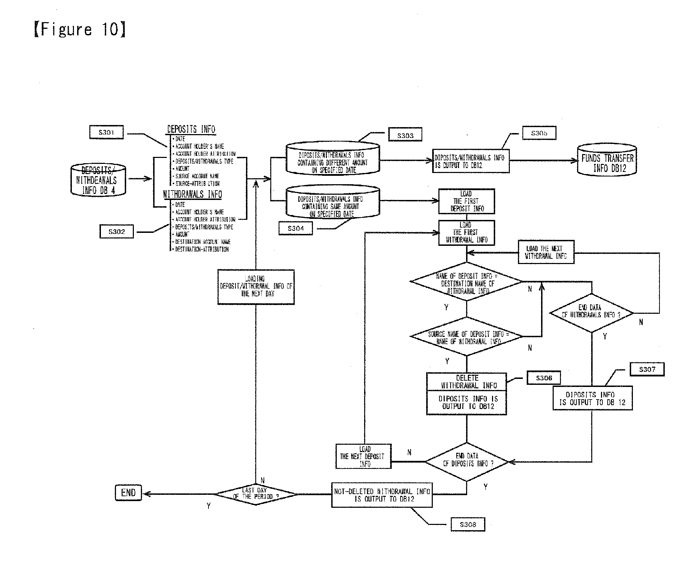

As shown in Figure 10, Funds Circulation Information is generated as follows: First, Deposits/Withdrawals Information Database 4 is accessed so that the deposits/withdrawals information is divided into Deposits Information (S301) and Withdrawals Information (S302). Thereafter the Deposits Information and Withdrawals Information which contain different amounts on the starting date of the designated period (S303) and Deposits Information and Withdrawals Information which contain the same amounts on the starting date of the designated period (S304) are extracted.
Said extracted deposits information and withdrawals information which contain different amount (S303) are output to Funds Transfer Information Database 12 as the deposits information and the withdrawals information which contain non-identical transactions (S305).

Subsequently, in terms of the deposits information and the withdrawals information which contain the same amount on the designated date (S304), the first deposit information and the first withdrawal information are loaded and are followed by the following processing: within the entire withdrawal transactions from the first withdrawal transaction to the last withdrawal transaction, against the first deposit information, it is determined whether the account holder's name of the deposit information and the destination account holder's name of the withdrawal information are the same, while at the same time determining whether the source account holder's name of the deposit information and the account holder's name of the withdrawal information are the same. If the account holder's name is the same, it is determined to be the identical transaction, and the withdrawal information is deleted and only the deposit information is output to Funds Transfer Information Database 12 (S306).
Then, the next deposit information is loaded and the aforementioned processing steps are conducted. After the processing steps are conducted with the entire deposit information, the not-deleted withdrawal information is output to Funds Transfer Information Database 12 (S308).
Further, the deposit information and the withdrawal information of the transactions in which the account holder's name of the deposit information and the destination account holder's name of the withdrawal information are different, or where the source account holder's name of the deposit information and the account holder's name of the withdrawal information are different, are output to Funds Transfer Information Database 12 as the deposits information which contain non-identical transactions (S307) and the withdrawals information (S308).
Thereafter, for the respective day from the day after the starting date to the end date of the designated period, the above described processing steps are conducted, resulting in the generation of Funds Transfer Information Database 12 wherein the identical transactions within the designated period are deleted.
Incidentally, the deposits information and the withdrawals information can be treated reversely in the above described processing.

Referring again to Figure 1, Funds Transfer Information Database 12 is accessed so that a funds circulation between each of the attributions or within the attribution is compiled by source/destination association, resulting in the generation of funds circulation information which is eventually output to Funds Circulation Information Database 13 (011).

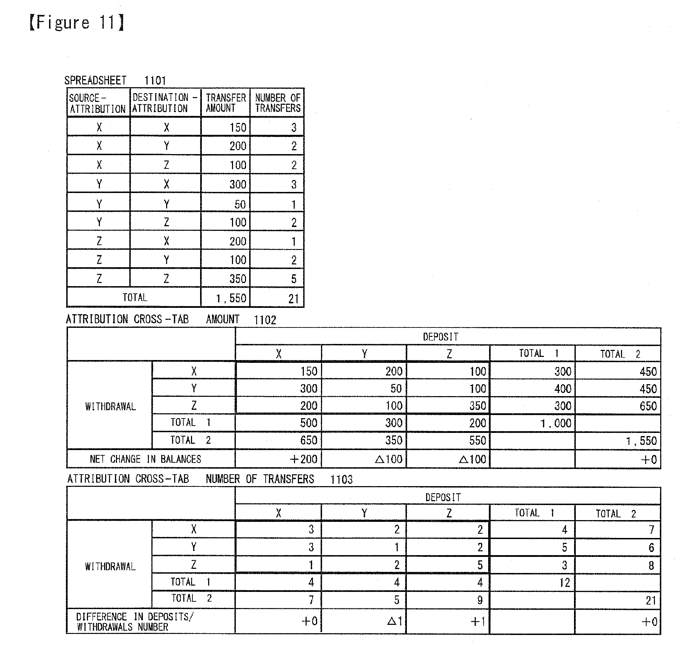

As shown in Figure 11, funds circulation information is generated as follows: First, a spreadsheet (1101) wherein the transfer amount between the source-attribution and the destination-attribution and the number of transfers are compiled on the basis of the funds transfer information between each of the attributions or within the attribution within the designated period.

For example, the total amount of the transfers is 1,550 and the total number of the transfers is 21 in the case as follows: the transfer amount from the source-attribution X to the destination-attribution X is 150 and the number of transfers is 3; the transfer amount from the source-attribution X to the destination-attribution Y is 200 and the number of transfers is 2; the transfer amount from the source-attribution X to the destination-attribution Z is 100 and the number of transfers is 2; the transfer amount from the source-attribution Y to the destination-attribution X is 300 and the number of transfers is 3; the transfer amount from the source-attribution Y to the destination-attribution Y is 50 and the number of transfers is 1; the transfer amount from the source-attribution Y to the destination-attribution Z is 100 and the number of transfers is 2; the transfer amount from the source-attribution Z to the destination-attribution X is 200 and the number of transfers is 1; the transfer amount from the source-attribution Z to the destination-attribution Y is 100 and the number of transfers is 2; the transfer amount from the source-attribution Z to the destination-attribution Z is 350 and the number of transfers is 5.

Subsequently, an attribution cross-tab (1102) of the amount and an attribution cross-tab (1103) of the number are generated by inputting the transfer amount between each of the attributions or within the attribution and the number of transfer into the relevant items within the cross-tabs (1101), and calculating the total and the difference.
Herein, the total 1 within the attribution cross-tab (1102) (1003) denotes the total amount/number of the transfers between different attributions or within the attribution. The total 2 denotes the sum of the total amount/number of the transfers between the same attributions or within the attribution and the total 1. The net change in balances within the attribution cross-tab (1102) denotes the value which is derived by deducting the total withdrawal amount 2 from the total deposit amount 2 per attribution. The difference in deposits/withdrawals number within the attribution cross-tab (1103) denotes the value which is derived by deducting the total withdrawal amount 2 from the total deposit amount 2 per attribution.

For example, in regard to attribution cross-tab (1102), the values are calculated as follows: In terms of the deposit of attribution X, the total 1 is 500 calculated according to the expression 300 plus 200 and the total 2 is 650 calculated according to the expression 150 plus 300 plus 200. In terms of the deposit of attribution Y, the total 1 is 300 calculated according to the expression 200 plus 100 and the total 2 is 350 calculated according to the expression 200 plus 50 plus 100. In terms of the deposit of attribution Z, the total 1 is 200 calculated according to the expression 100 plus 100 and the total 2 is 550 calculated according to the expression 100 plus 100 plus 350. Also, in terms of the withdrawal of attribution X, the total 1 is 300 calculated according to the expression 200 plus 100 and the total 2 is 450 calculated according to the expression 150 plus 200 plus 100. In terms of the withdrawal of attribution Y, the total 1 is 400 calculated according to the expression 300 plus 100 and the total 2 is 450 calculated according to the expression 300 plus 50 plus 100. In terms of the withdrawal of attribution Z, the total 1 is 300 calculated according to the expression 200 plus 100 and the total 2 is 650 calculated according to the expression 200 plus 100 plus 350.

The net change in balances of attribution X is +200 calculated according to the expression 650 minus 450, meaning the total deposit amount 2 minus the total withdrawal amount 2. The net change in balances of attribution Y is -100 calculated according to the expression 350 minus 450, meaning the total deposit amount 2 minus the total withdrawal amount 2. The net change in balances of attribution Z is -100 calculated according to the expression 550 minus 650, meaning the total deposit amount 2 minus the total withdrawal amount 2.

The attribution cross-tab (1103) is generated by conducting the same processing as described above, however, the net change in balances is to be replaced with the difference in deposits/withdrawals number.
Conventionally, an association between the funds transfer and the funds circulation was determined secondarily based on enumerations or statistics which had been previously generated. Accordingly, it has been difficult to utilize this conventional process due to its lack of consistency, timeliness, immediacy, and scalability.
This invention allows one to perceive the association between the funds transfer and the funds circulation between each of the given attributions or within the attribution from the account transaction record directly, timely, and immediately.

Referring again to Figure 1, Funds Circulation Information Database 13 is accessed so that information elements which explain the funds transfer between each of the attributions or within the attribution are extracted and are converted into variables and index numbers, resulting in the generation of a Funds Circulation Trend Index which indicates the funds transfer between each of the attributions or within the attribution, which is eventually output to Funds Circulation Trend Index Database 14 (012).

Finally, Business Financing Trend Index Database 6, Individual Financing Trend Index Database 7, Business Performance Trend Index Database 8, Household Budgeting Trend Index Database 9, Business Performance Prediction Index Database 10, Household Budgeting Prediction Index Database 11, and Funds Circulation Trend Index Database 14 are accessed so that information elements which explain the overall economic activity status are extracted and are converted into variables and index numbers, resulting in the generation of a Total Economic Activity Index which indicates the overall economic activity status, which is eventually output to Total Economic Activity Index Database 15 (013).

To summarize, the present embodiment allows one to analyze and perceive the overall economic activity status of companies and individuals more promptly, and more particularly. Said embodiment is achieved by following the process as follows: First, Account Transaction Record Information and Supplementary Information are exported from the core banking system (including an information system) to a data processor. Said Account Transaction Record Information contains deposits/withdrawals records and balance records in which the current economic transactions (receipts/disbursements of funds, settlements) have been directly recorded in accounts of financial institutions and reflect the actual economic transactions. These transactions are conducted through financial institutions because financial institutions have clearing functions and saving functional capabilities. And said Supplementary Information (including finance information and attribution information such as region, company size, category of business, rating, age, sex, and occupation) contains account holder (principal) information, source-of-funds account holder information, and destination-of-funds account holder information. Second, sources/destinations of deposits/withdrawals are linked (link means make associations between data) and journalized for prescribed items. Then the data are compiled by journalized subcategories and any consolidated categories (for example by attribution of account holder, finance item, or the like), subsequently the compiled data are converted into index numbers. Especially, economic trend indices can be generated by temporally analyzing the Account Transaction Record Information which are stored in chronological order for a prescribed period of time.

The following explains how the information is converted into variables and index numbers. For example, the financing trend index indicates the tightness level of financing, calculated by the following process. The results of compiling related to the financing trend such as transitions of variables (month-to-month basis, change rate, increased/decreased number, or the like) which are mainly calculated by the balances on particular dates, the monthly peak/bottom balance, the monthly average balance, or the monthly deviations of daily balances are extracted and are converted into variables with added weight. In addition, the tightness level of financing with consideration of the business conditions by business scale (operating cash flow) can be perceived by analyzing the transitions of proportion level of the balance on the particular date (stock) to the journalized monthly deposits/withdrawals on business operation (flow).
The following describes an example of such analysis. In terms of the amount or the number of journalized deposits/withdrawals on business operation, the monthly value or the moving average and the level of its amplitude are converted into variables so that a standard value as a threshold value is set by conducting a comparative analysis of failed companies and stable companies. Then, companies with higher values for said standard value and those with lower values are determined so that a rate of the number of the companies or the like per account holder attribution are calculated and are converted into index numbers (index numerical conversion).

For example, the index numerical conversion is conducted as follows. If a month-to-month basis of daily average of the monthly balance is set as a converted variable value, the proportions over the preceding month are journalized into +5% or more, -5% ∼ +5%, -5% or less, and the like. The number of companies, the proportion of the number of the companies, or the increase and decrease of the proportion of the number of the companies per classification can be converted into index numbers. Herein, it is ideal to set the value of a given standard month as 100 in order to normalize the index numerical conversion.
Moreover, the economic activity index can be generated by consolidating categories wherein a plurality of indices, which are calculated based on a single economic activity, are added weight. However, the index journalized in subcategories can also be presented.

As described above, the present embodiment allows one to calculate the Business Financing Trend Index, the Individual Financing Trend Index, the Business Performance Trend Index, the Household Budgeting Trend Index, the Business Performance Prediction Index, and the like as economic activity indices. The Performance Trend Index is generated by means of index numerical conversions of the activity level of business activities and the trading conditions (statuses of the number of clients, the unit price of transactions, or the attributions of business contacts). Here, the activity level of business activities are derived from the trend of the journalized deposits/withdrawals on business operation, and the trading conditions are derived from the trend of transactions with the deposits/withdrawals destinations. In terms of the Business Performance Prediction Index, the index numerical conversion of the performance prediction trend is derived by predicting the sales, cost, expense, and profit of the current fiscal term and after by means of the trend of the journalized deposits/withdrawals on business operation and the past financial information. Further, assets such as receivables and stocks and liabilities such as debt loan and the like can be predicted, so that the index numerical conversion of the trend of the assets, liabilities, and capital as a difference between the assets and the liabilities can be achieved. Furthermore, situations involving credit risk can be analyzed by the financing trend, performance trend, and the performance prediction. The same trend indices can be generated in terms of individuals.

As described above, the present embodiment allows one to see the transfer amounts between source-attributions and destination-attributions, the number of transfers, or the like within the designated period, by analyzing the funds transfers. Accordingly, the Funds Circulation Index can be generated on the basis of the aforementioned data.
Further, each of the source-of-funds and the destination-of-funds is linked to respective attribution data. Therefore, in terms of the funds circulation trend, it is capable of re-compiling the indices by setting keys such as region, company size, category of business (manufacturing industry, wholesale industry, retailing industry, or the like), age, rating, or the like without conducting another round of survey. Additionally, sex or the like can be used as an attribution in terms of individuals.

In this way, the present embodiment allows one to collect financial transaction data. Also, attributions of the source of the funds or the destination of the funds are linked to each account transaction, and the generated transaction data are journalized for each item. Thus, data which reflects a variety of economic activities can be derived. And consequently a variety of economic activity indices can be generated by converting the data into index numbers.

## Claims

1. An economic activity index presenting system, wherein:
Account Transaction Record Information and Supplementary Information are to be imported from a core banking system of a financial institution;
said Account Transaction Record Information and Supplementary Information being utilized to create indices which allow for the analysis of economic activities for each account holder by some means comprised in the system:
means for linking the Account Transaction Record Information to the Supplementary Information to generate Deposit Source/Withdrawal Destination Linking Information;
means for extracting the balance information for each account and the deposits/withdrawals information from the Deposit Source/Withdrawal Destination Linking Information;
means for journalizing the extracted deposits/withdrawals information by each of the prescribed items;
means for compiling the journalized deposits/withdrawals information by each of the prescribed items; and
means for combining the complied deposits/withdrawals information and the balance information for each account to create an index calculation.

2. An economic activity index presenting system, wherein:
Account Transaction Record Information is to be imported from a core banking system of a financial institution;
said Account Transaction Record Information being utilized to create indices which allow for the analysis of economic activities for each account holder by some means comprised in the system:
means for extracting the balance information for each account and the deposits/withdrawals information from the Account Transaction Record Information;
means for journalizing the extracted deposits/withdrawals information by each of the prescribed items;
means for compiling the journalized deposits/withdrawals information by each of the prescribed items; and
means for combining the complied deposits/withdrawals information and the balance information for each account to create an index calculation.

3. The economic activity index presenting system according to claim 1, wherein:
said journalizing means utilizes the following data:
transaction type,
date,
subject,
amount,
transaction frequency,
notes,
account holder information of the target account for the journalizing, and
source-of-funds account holder information,
or destination-of-funds account holder information.

4. The economic activity index presenting system according to claim 1 or claim 2, wherein each of the prescribed items is each of the sources of the funds in terms of deposits and each of the usage of the funds in terms of withdrawals.

5. The economic activity index presenting system according to claim 4, wherein:
said each of the sources is characterized to include
sales, borrowing, or financial transaction in terms of companies,
salary/bonus, pension, cash deposit, financial transaction, or borrowing in terms of individuals.

6. The economic activity index presenting system according to claim 4, wherein:
said each of the usage of the funds is characterized to include
cost, repayment of debt, or financial transaction in terms of companies,
social insurance premium/tax payment, repayment of debt, or paying in terms of individuals.

7. The economic activity index presenting system according to claim 1 or claim 2, wherein said each of the prescribed items is characterized to be either continuous or non-continuous in terms of both deposits and withdrawals.

8. The economic activity index presenting system according to claim 1, wherein:
said Supplementary Information linked to the Account Transaction Record Information to include
account holder information of the target account for the journalizing, and
the source-of-funds account holder information or the destination-of-funds account holder information in terms of deposits/withdrawals within the account.

9. The economic activity index presenting system according to claim 1 or claim 2, wherein:
said indices are characterized to be chosen from either
a Business Financing Trend Index which indicates the tightness level of financing of companies,
an Individual Financing Trend Index which indicates the tightness level of financing of individuals,
a Business Performance Trend Index which indicates the activity level of business activities,
a Household Budgeting Trend Index which indicates the status of household incomes and spending,
a Business Performance Prediction Index which predicts the performance of companies,
or a Household Budgeting Prediction Index which predicts the household budgeting of individuals.

10. The economic activity index presenting system according to claim 9, wherein said Business Performance Prediction Index is generated based on finance information and deposits/withdrawals information.

11. The economic activity index presenting system according to claim 9, wherein said Household Budgeting Prediction Index is generated based on record information and deposits/withdrawals information.

12. The economic activity index presenting system according to claim 1, wherein:
each of the account holders is journalized into a plurality of attributions on the basis of said Supplementary Information,
a means of index conversion which generates said indices by attributions,
and said index conversion means for analysis of economic activities by attribution.

13. The economic activity index presenting system according to claim 1, wherein:
a source-attribution and a destination-attribution of deposits/withdrawals information are distinguished by said Supplementary Information,
and a Funds Circulation Trend Index is calculated by a cross-tab of funds transfer between each of the attributions or within the attribution on the basis of said distinction.

14. The economic activity index presenting system according to claim 13, wherein:
in the process of said Funds Circulation Trend Index calculation, either of said deposits/withdrawals information is deleted when they are considered to be the identical transaction in the case that:
the date is the same,
the amount is the same,
the account holder's name of the deposit and destination-of-funds account name of the withdrawal is the same,
and the source-of-funds account name of the deposit and the account holder's name of the withdrawal is the same.

15. The economic activity index presenting system according to claim 13, wherein:
in the process of said Funds Circulation Trend Index calculation, either of said deposits/withdrawals information is deleted when they are considered to be the identical transaction in the case that:
the date is the same,
the amount is the same,
the account holder's name of the withdrawal and the source-of-funds account name of the deposit is the same,
and the destination-of-funds account name of the withdrawal and the account holder's name of the deposit is the same.

16. The economic activity index presenting system according to claim 12 or claim 13, wherein said attribution is chosen from either company size, region, category of business, rating, length of time of operation, age, sex, occupation, residence form, or household composition.
